# EUROPÄISCHE PATENTANMELDUNG

(11) **EP 4 403 253 A1**
(43) Veröffentlichungstag der Anmeldung: **24.07.2024**
(21) Anmeldenummer: 23152971.0
(22) Anmeldetag: 23.01.2023
(51) Int. Cl.: B01F 33/80, B01F 33/83, B01F 27/808, B01F 27/053, B01F 35/51, B01F 35/511, B01F 35/43, B01J 2/10, B01F 101/22

(54) **MISCHGRANULATOR**

(71) Anmelder: DIOSNA Dierks & Söhne GmbH, 49086 Osnabrück (DE)
(72) Erfinder: OEVERMANN, Henrik, 49448 Quernheim (DE)
(74) Vertreter: Lenzing Gerber Stute

(57) **Zusammenfassung**

Die Erfindung betrifft einen Mischgranulator (1) mit einem Behälter (2) zur Aufnahme eines Produktes, einem in dem Behälter (2) befindlichen, auf einer vertikal ausgerichteten Welle (7) sitzenden Mischwerkzeug (8) und einem in dem Behälter (2) befindlichen Zerkleinerungswerkzeug (16), wobei wenigstens ein produktberührendes Bauteil, nämlich
der Behälter (2),
das Mischwerkzeug (8), und
das Zerkleinerungswerkzeug (16),
zumindest teilweise aus einem Kunststoff oder einem Kunststoff-Verbundwerkstoff gebildet ist.

## Beschreibung

Die vorliegende Erfindung betrifft einen Mischgranulator mit den Merkmalen des Oberbegriffs des Anspruchs 1, eine Verwendung des Mischgranulators, einen Behälter mit den Merkmalen des Oberbegriffs des Anspruchs 11, eine Verwendung des Behälters, sowie ein Verfahren zum Granulieren mit einem Mischgranulator.

Mischgranulatoren oder auch Chargenmischer weisen einen festen Behälter auf, in den eine vertikal ausgerichtete Antriebswelle hineinragt, auf der ein Mischwerkzeug sitzt. Das Mischwerkzeug hat die Aufgabe, ein Pulver mit Zuschlagstoffen zu vermischen. Dem Mischgut kann optional Granulierflüssigkeit zugegeben werden. Seitlich in den Behälter ragt ein Zerkleinerungswerkzeug. Das Zerkleinerungswerkzeug zerkleinert vorliegende Klumpen und kompaktiert das angefeuchtete Mischgut. Der Behälter kann eine Auslauföffnung aufweisen, durch die der Behälter bei laufendem Mischwerkzeug entleert werden kann. Es ist aber auch bekannt, den Behälter für die Entleerung zu entnehmen.

Mischgranulatoren sind im Wesentlichen aus Edelstahl gebildet. Bei Mischgranulatoren kann es sich um Mehrzweckanlagen handeln. Wenn in solchen Mehrzweckanlagen wertvolle oder toxische Stoffe verarbeitet werden, muss eine Reinigungsvalidierung durchgeführt werden. Für jede Reinigungsvalidierung muss eine risikobasierte Betrachtung sämtlicher Stoffe, die in das nachfolgende Produkt gelangen können, erfolgen. Hierzu zählen Rückstände von Wirkstoffen, Reinigungsmitteln und möglichen Abbauprodukten. Um mögliche Kreuzkontaminationen im Folgeprodukt zu vermeiden, werden Akzeptanzkriterien definiert.

Bei vielen Stoffen bei Pharmaanwendungen müssen Grenzwerte von OEB 5 eingehalten werden, um die Bediener effektiv vor Folgeschäden zu schützen.

Die Abkürzung OEB steht für "Occupational Exposure Band" und gibt Auskunft darüber, welches Gefährdungspotential von einem Stoff ausgeht. Der OEB-Wert beschreibt dabei die Toxikologie des reinen Stoffes. Zur Veranschaulichung ist hier als Beispiel OEB 5 genannt. OEB 5 entspricht einer Belastung von <1µg/m3. Ein Beispiel für eine solche Applikation sind hochaktive Wirkstoffe, die auch High Potency Active Pharmaceutical Ingredients (HPAPIs) genannt werden, und oftmals toxisch sind. Diese Wirkstoffe weisen mindestens eines der folgenden Kriterien auf:
- sind hochwirksam (therapeutische Dosen von weniger als 0,5 mg/Tag),
- haben bereits bei niedrigen Dosen erhebliche schädliche Wirkungen (lebensbedrohlich, irreversibel oder stark sensibilisierend),
- können in relevanten Dosen genotoxisch oder karzinogen sein oder reproduktive Auswirkungen haben.

Beispiele solcher Wirkstoffe sind:
- Vincristin,
- Doxorubicin,
- Gemcitabin,
- Bleomycin.

Hochaktive Wirkstoffe werden in sogenannten High-Containment Anwendungen verarbeitet, die den Grenzwert von OEB 5 einhalten.

Es ist Aufgabe der vorliegenden Anmeldung einen Mischgranulator anzugeben, der einfach und kostengünstig einsetzbar ist.

Die Aufgabe wird von einem Mischgranulator mit den Merkmalen des Anspruchs 1 sowie von einer Verwendung eines Mischgranulators, einem Behälter mit den Merkmalen des Anspruchs 11 sowie von einer Verwendung eines Behälters und einem Verfahren zum Granulieren mit einem Mischgranulator mit den Merkmalen des Anspruchs 14 gelöst.

Demnach ist ein Mischgranulator mit einem Behälter zur Aufnahme eines Produktes, einem in dem Behälter befindlichen, auf einer vertikal ausgerichteten Welle sitzenden Mischwerkzeug und einem in dem Behälter befindlichen Zerkleinerungswerkzeug, vorgesehen. Wenigstens ein produktberührendes Bauteil, nämlich
der Behälter,
das Mischwerkzeug,
das Zerkleinerungswerkzeug,
ist zumindest teilweise aus einem Kunststoff oder einem Kunststoff-Verbundwerkstoff gebildet.

Unter produktberührenden Bauteilen werden mit dem Produkt in Kontakt kommende Bauteile verstanden. Diese werden auch produktführende Bauteile genannt. Die in der Auflistung aufgezählten Bauteile sind nicht die einzigen produktberührenden Bauteile. Bekannt war es bereits beispielsweise einen Deckel des Behälters oder auch Dichteinrichtungen zumindest teilweise aus Kunststoff zu fertigen. Die aufgelisteten Bauteile wurden bisher ausschließlich aus Edelstahl gefertigt.

Dadurch, dass das wenigstens eine produktberührende Bauteil zumindest Teilweise aus Kunststoff oder einem Kunststoff-Verbundwerkstoff gebildet ist, ist die Herstellung deutlich günstiger gegenüber herkömmlich verwendetem Edelstahl. Eine Einmalverwendung ist somit möglich, wodurch eine Reinigungsvalidierung zumindest teilweise entfallen kann. Es ist denkbar, dass nur der Behälter das wenigstens eine produktberührende Bauteil bildet. Besonders bevorzugt sind alle in der Aufzählung genannten Bauteile zumindest teilweise aus einem Kunststoff oder einem Kunststoff-Verbundwerkstoff gebildet.

Der Behälter weist bevorzugt einen ersten Bereich, der das Produkt aufnimmt mit einer Behälterwandung und einem Boden, aufweisend eine Öffnung zur Durchführung der Welle und einen daran anschließenden Verbindungsbereich, der eine zwischen einem Antrieb und der Welle befindliche Kupplung umgibt, auf. Dabei ist in der Behälterwandung im ersten Bereich ein Flansch für das Zerkleinerungswerkzeug angeordnet. Zusätzlich kann in der Behälterwandung ein Auslauf zur Entnahme des Produktes vorhanden sein. Der Behälter ist bevorzugt einstückig aus einem Kunststoff oder einem Kunststoff-Verbundwerkstoff gebildet. Insbesondere ist der Behälter in einem Spritzgussverfahren zumindest teilweise ausgebildet.

Der Kunststoff oder der Kunststoff-Verbundwerkstoff ist vorzugsweise lebensmittelecht.

Das Mischwerkzeug weist bevorzugt Flügel auf und das Zerkleinerungswerkzeug ist im Wesentlichen u-förmig ausgebildet. Es ist auch denkbar, dass das Zerkleinerungswerkzeug 2-u-förmig oder als tannenbaumförmiger Zerhacker und dergleichen ausgeformt ist. Vorteilhaft ist es, wenn die Rotationsachse des Zerkleinerungswerkzeuges senkrecht zur Drehachse des Mischwerkzeuges liegt.

Der Mischgranulator kann einen Unterbau, bevorzugt in Form eines Unterschrankes aufweisen, der den Antrieb des Mischwerkzeugs sowie einen Antrieb des Zerkleinerungswerkzeuges abdeckt. Insbesondere handelt es sich bei dem Mischgranulator um ein Tischgerät. Der Unterbau ist bevorzugt aus Edelstahl gebildet.

Es ist besonders vorteilhaft, wenn der Behälter mit dem Unterbau mittels einer händisch, ohne Werkzeug, zu lösenden Verbindung, insbesondere einer Bajonettverbindung verbunden ist bzw. ganz allgemein der Behälter entnehmbar ausgebildet ist und der Behälter mit dem Unterbau verbindbar mittels einer Bajonettverbindung ist.

Der erste Bereich des Behälters ist bevorzugt jeweils mittels Dichtungseinrichtung gegenüber dem Mischwerkzeug und dem Zerkleinerungswerkzeug nach außen hin abgedichtet.

Weiterhin ist eine Verwendung eines zuvor beschriebenen Mischgranulators zur Vermischung von pharmazeutischem Pulver mit Zuschlagstoffen vorgesehen, insbesondere in einer High Containment Anwendung.

Außerdem ist ein Behälter für einen Mischgranulator aufweisend
- einen ersten Bereich, der dazu ausgebildet ist ein Produkt aufzunehmen, mit einer Behälterwandung und einem Boden, aufweisend eine Öffnung zur Durchführung einer Welle eines Mischwerkzeuges und
- einen daran anschließenden Verbindungsbereich, wobei
der Behälter in der Behälterwandung im ersten Bereich einen Flansch für das Zerkleinerungswerkzeug aufweist und eine dem Boden gegenüberliegende Öffnung mit einem Rand hat, vorgesehen. Der Behälter ist zumindest teilweise aus einem Kunststoff oder einem Kunststoff-Verbundwerkstoff gebildet.

Dadurch ergibt sich der Vorteil, dass der Behälter besonders kostengünstig herstellbar ist und sich daher zum Einmalgebrauch eignet.

Außerdem ist eine Verwendung des Behälters für einen Mischgranulator zur Vermischung von pharmazeutischem Pulver mit Zuschlagstoffen, insbesondere in einer High Containment Anwendung vorgesehen. Der Behälter kann zudem einen Auslauf zur Entnahme des Produktes aufweisen. Der Behälter ist bevorzugt in einem Spritzgussverfahren zumindest teilweise ausgebildet. Es ist vorteilhaft, wenn der Behälter einstückig aus Kunststoff oder Kunststoff-Verbundwerkstoff gebildet ist.

Zudem ist ein Verfahren zum Vermischen, insbesondere Granulieren von Stoffen mit einem zuvor beschriebenen Mischgranulator vorgesehen, wobei das Verfahren die folgenden Schritte umfasst:
- Einbringen der Stoffe in den Behälter,
- Vermischen der Stoffe in dem Behälter mittels des Mischwerkzeuges,
- Entnehmen oder Austragen des Produktes aus dem Behälter, wobei das wenigstens eine produktberührende Bauteil entsorgt und erneuert wird, wenn ein Reinigungsprozess notwendig wäre, um Kreuzkontamination zu verhindern.

Durch die Entsorgung des wenigstens einen produktberührenden Bauteils wird die Reinigungsvalidierung deutlich vereinfacht oder entfällt vollständig. In einer bevorzugten Ausführungsform ist das Verfahren eine High Containment Anwendung und das wenigstens eine produktberührende Bauteil umfasst den Behälter. Wenn das Zerkleinerungswerkzeug bei dem Vorgang benötigt wird, insbesondere wenn Flüssigkeit zugegeben wird, umfasst das Verfahren, dass das Zerkleinerungswerkzeug rotiert wird.

Eine bevorzugte Ausführungsform der Erfindung wird nachfolgend anhand der Zeichnungen näher erläutert. Gleiche bzw. funktionsgleiche Bauteile sind dabei figurübergreifend mit denselben Bezugszeichen versehen. Es zeigen:
- Fig. 1:: eine räumliche Ansicht eines Mischgranulators,
- Fig. 2:: einen Längsschnitt durch den Mischgranulator der Figur 1,
- Fig. 3:: einen Längsschnitt durch einen Behälter des Mischgranulators der Figur 1, sowie
- Fig. 4:: eine räumliche Ansicht des Behälters.

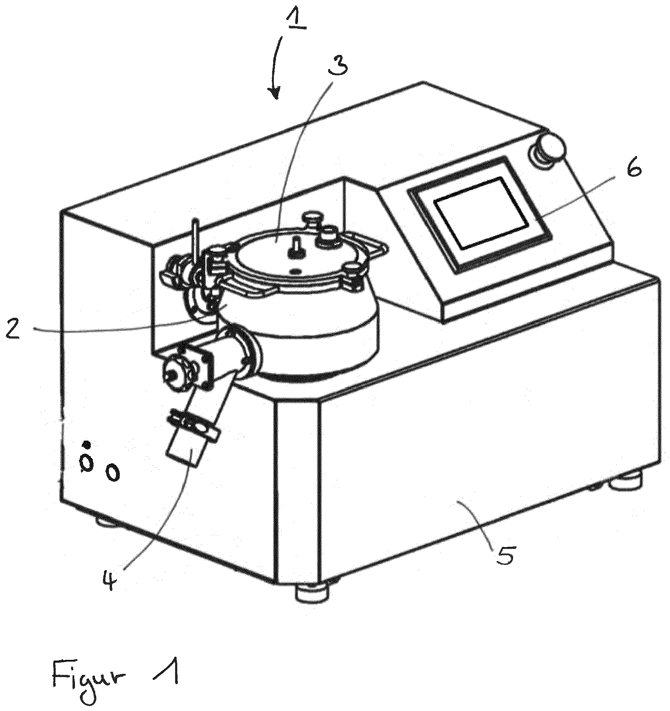

Figur 1 zeigt einen Mischgranulator 1, der als Tischgerät ausgebildet ist und das Mischen, Granulieren und Pelletieren bei der Entwicklung fester, oraler Arzneiformen ermöglicht. Der Mischgranulator 1 weist einen Behälter 2 mit einem Deckel 3 auf. Im unteren seitlichen Bereich des Behälters 2 ist ein Auslauf 4 angeordnet. Ein nicht dargestelltes dreiflügeliges Mischwerkzeug ist in dem Behälter 2 angeordnet. Weiterhin ist ein nicht dargestelltes Zerkleinerungswerkzeug in Form eines Zerhackers vorgesehen, das innerhalb des Behälters 2 liegt und von einer Antriebswelle über eine Antriebskupplung zur Rotation angetrieben wird. Außerdem weist der Mischgranulator 1 einen Unterbau 5 aus Edelstahl auf. Der Unterbau 5 ist bevorzugt fahrbar und besitzt vier Lenkrollen. Er kann auch mit Standfüßen ausgebildet sein. Der Unterbau 5 deckt den Antrieb des Mischwerkzeugs und den Antrieb des Zerkleinerungswerkzeugs ab und in den Unterbau 5 ist eine Bedienereinheit 6 eingesetzt ist, über die ein Bediener den Mischgranulator 1 steuern und überwachen kann. Der Mischgranulator 1 ist bevorzugt derart dimensioniert, dass er auf einem Tisch platziert werden kann. Die Größe des Mischgranulators 1 ist abhängig vom Fassungsvermögen des Behälters 2. Das Behälterfassungsvermögen liegt bevorzugt zwischen 0,25 und 6 I. Der Mischgranulator 1 kann Trockenmischungen und Feuchtgranulate herstellen.

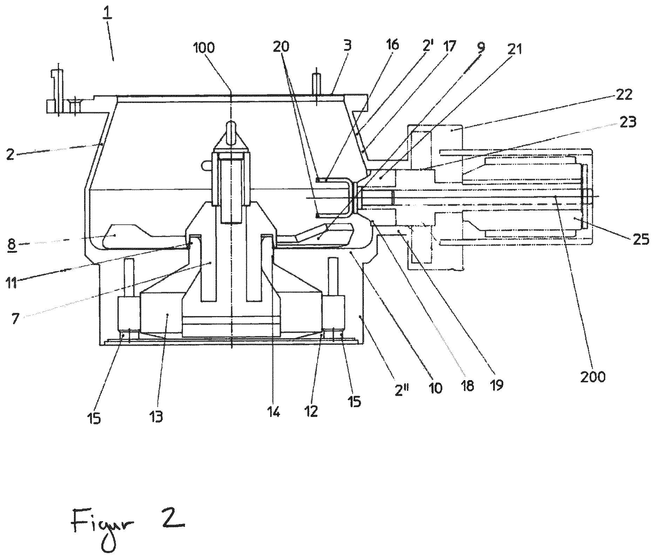

In der Figur 2 ist der Mischgranulator 1 mit seinen Bestandteilen im Detail dargestellt. Die Welle 7 des Mischwerkzeugs 8 ist vertikal und zentral bzw. konzentrisch im Behälter 2 angeordnet (Vertikalmischer). Auf der Welle 7 sitzt das Mischwerkzeug 8. Das Mischwerkzeug 8 weist drei gleichmäßig um eine Rotationsachse 100 der Welle 7 beabstandete Flügel 9 auf. Die drei Flügel 9 des Mischwerkzeugs 8 sorgen für die Durchmischung der Rohstoffe (i.d.R. Pulver). Auf die Welle wird dabei das Mischwerkzeug vom Ende her aufgeschoben und mittels Befestigungsschraube verschraubt. Der Antrieb der Welle liegt unterhalb des Behälters 2 und ist hier nicht dargestellt. Der Behälter 2 ist in einem ersten Bereich 2', in dem das zu mischende Gut aufgenommen wird, zylindrisch und nach oben hin konisch zulaufend ausgebildet. Der Behälter 2 weist in diesem ersten Bereich 2' einen Boden 10 mit einer Öffnung 11 auf, die von der Welle 7 des Mischwerkzeugs 8 durchsetzt ist. Die Flügel des Mischwerkzeugs liegen in unmittelbarer Nähe zu dem Boden 10. Die Flügel sind gegenüber der Ebene des Bodens 10 aufgestellt und ausgehend von der Rotationsachse 100 zur Radialrichtung abgewinkelt.

Unterhalb des ersten Bereichs 2' erstreckt sich ein Verbindungsbereich 2" des Behälters 2. Der Verbindungsbereich 2" weist eine durchsetzende Öffnung 12 auf, die sich an die Öffnung 11 im Boden 10 des ersten Bereichs 2' anschließt. In der durchsetzenden Öffnung 12 des Verbindungsbereichs 2" liegt ein Kupplungsteil 13 einer Kupplung, die die Welle 7 mit dem nicht dargestellten Antrieb verbindet. Die Kraftübertragung in der Kupplung erfolgt durch eine Passfeder. Der Antrieb des Mischwerkzeugs erfolgt durch einen Drehstrommotor, dessen Drehzahl mittels eines Frequenzumrichters verstellbar ist.

In die durchsetzende Öffnung 11 des Bodens 10 ist eine Dichtungseinrichtung 14, insbesondere eine Buchse eingesetzt, die das Kupplungsteil 13 auf der Außenseite umgibt und in das Innere des Behälters 2 im ersten Bereich 2' durch die Öffnung 11 im Boden 12 hineinragt und die Welle 7 des Mischwerkzeugs 8 gegenüber dem Behälter 2 abdichtet. Die Dichtungseinrichtung 14 ist bevorzugt aus Polytetrafluorethylen (PTFE) hergestellt. Die Dichtungseinrichtung 14 dichtet den Innenraum des Behälters gegenüber dem Außenraum ab, so dass die in dem Behälter 2 aufgenommenen Pulver bzw. Stoffe nicht nach draußen gelangen können.

Der Behälter 2 wird auf eine nicht dargestellte Behälteraufnahme aufgesetzt und bevorzugt mittels eines Bajonettverschlusses arretiert. Dazu weist der Behälter 2 im Verbindungsbereich 2" stirnseitig Ausnehmungen 15 auf.

Der Behälter 2 ist mit dem Deckel 3 verschließbar. Der Deckel 3 ist bevorzugt ein transparenter Kunststoffdeckel, der abnehmbar ausgeführt und mit einem Runddichtring ausgestattet ist. Auf dem Deckel befindet sich ein nicht dargestellter Sintermetallfilter als Entgasungsfilter. Zwei nicht dargestellte Bohrungen im Deckel erlauben die Zugabe von Granulierflüssigkeit und den Einbau eines Temperaturfühlers (optional).

In den vom ersten Bereich 2' des Behälters 2 umschlossenen Raum greift zusätzlich zum Mischwerkzeug 8 ein Zerkleinerungswerkzeug 16 ein. Das Zerkleinerungswerkzeug 16 ist im Bereich der Behälterwandung 17 angeordnet. Der Behälter 2 weist dazu in der Behälterwandung 17 eine Öffnung 18 mit einem daran anschließenden Flansch 19 auf. Durch die Öffnung 18 ragt das Zerkleinerungswerkzeug 16. Das Zerkleinerungswerkzeug 16 ist u-förmig ausgebildet, wobei sich die beiden Schenkel 20 parallel zur Drehachse 200 erstrecken und jeweils scharfe Kanten aufweisen, die eine Zerhackwirkung haben. Zur Abdichtung ist eine zwischen dem Zerkleinerungswerkzeug 16 und dem Flansch 19 angeordnete Dichtungseinrichtung 21 vorgesehen. Bei der Dichtungseinrichtung 21 handelt es sich bevorzugt um eine PTFE-Buchse. Am Behälter 2 wird mittels einer Triclampverbindung 22 ein Lagergehäuse 23 mit einer Dichtung, zwei Kugellagern 24 und einer Kunststoffzahnkupplung 25 befestigt. Der Antrieb erfolgt bevorzugt durch einen nicht dargestellten frequenzgeregelten Drehstrommotor mit Riementrieb und pneumatisch betätigter Kupplung.

Das Zerkleinerungswerkzeug 16 dient der Zerkleinerung möglicher unerwünschter Agglomerate und dreht sich mit einer hohen Drehgeschwindigkeit, die deutlich größer als die Drehgeschwindigkeit des Mischwerkzeugs 8 ist. Die Drehachse des Mischwerkzeugs 100 steht senkrecht auf der Drehachse des Zerkleinerungswerkzeuges 200. Es ist aber auch denkbar, das Zerkleinerungswerkzeug derart anzuordnen, dass die Drehachse parallel zur Drehachse 100 des Mischwerkzeuges 8 liegt.

Der Behälter 2 wird manuell über die vom Deckel 3 verschlossene Öffnung beschickt. Die Homogenisierung der Mischkomponenten erfolgt im Allgemeinen durch das Mischwerkzeug 8. Die durchschnittliche Mischzeit sollte mindestens 2 Minuten betragen. Das Zerkleinerungswerkzeug 16 kann verwendet werden, um die Homogenisierungszeit zu verkürzen. Wenn Komponentenklumpen vorhanden sind, wird das Zerkleinerungswerkzeuges 16 verwendet, um Agglomerate zu zerkleinern.

Für den Fall, dass Feuchtgranulate hergestellt werden, erfolgt die Benetzung des Materials durch Granulierflüssigkeit, insbesondere durch einen freifließenden Strahl oder durch einen Sprühstrahl. Wenn ein Sprühstrahl gewählt wird, wird die Flüssigkeit bevorzugt durch eine Druckdüse oder eine zweistufige Düse zugegeben. Das Prinzip der Sprühgranulation besteht darin, Ausgangsprodukte von feinpulvriger bis körniger Beschaffenheit in ein einheitliches Granulat umzuwandeln. Dabei wird auf das Mischgut mit einer Einspritzvorrichtung eine geeignete Flüssigkeit fein verstäubt von oben aufgesprüht, welche ein Agglomerieren der Partikel bewirkt. Durch anschließende Trocknung werden diese Agglomerate fixiert.

Zum Pelletisieren wird eine erhöhte bzw. hohe Geschwindigkeit des Mischwerkzeugs 8 gegenüber dem Mischvorgang benötigt. Das Material zirkuliert innerhalb des Behälters 2 mehr oder weniger in Form eines Rings. Diese Bewegung ist notwendig, um eine Abrundung des Mischprodukts zu erreichen.

Nachdem das gewünschte Endergebnis erreicht ist, kann die Entnahme des fertigen Produktes über eine nicht dargestellte seitliche Austragsöffnung in der Wandung des Behälters im ersten Bereich 2' (Auslauf) erfolgen. Zum Entleeren kann der Auslauf bei rotierendem Mischwerkzeug geöffnet werden. Bei kleineren Behältern kann vorgesehen sein, zum Entleeren den Behälter von der Behälteraufnahme zu trennen und durch Öffnen des Deckels zu entleeren.

Der Behälter 2 mit dem Mischwerkzeug 8 und dem Zerkleinerungswerkzeug 16 kann von der Behälteraufnahme ohne Werkzeug abgenommen werden, zur Entleerung (Auskippen) und zum Austausch. Dazu wird der Zerkleinerungsantrieb pneumatisch ausgekuppelt, die Befestigungsschraube am Mischwerkzeug abgeschraubt und der Behälter durch leichtes Drehen aus der (Bajonett-) Verriegelung gelöst. Das Aufsetzen geschieht in umgekehrter Reihenfolge.

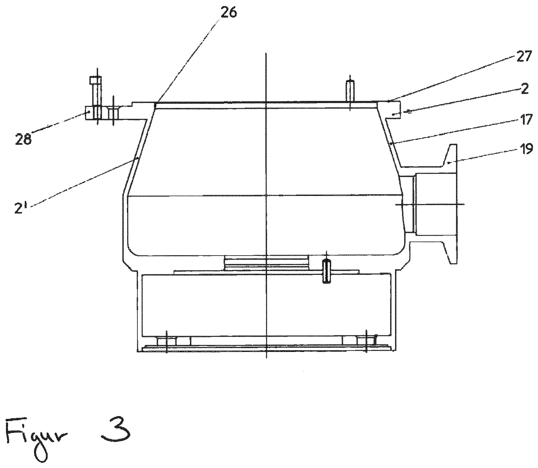

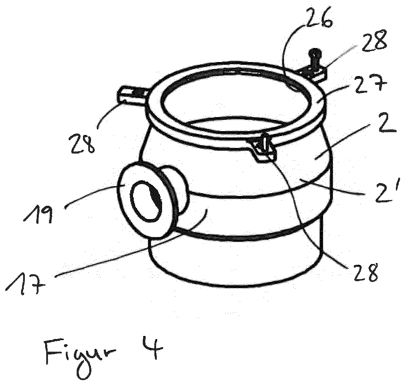

In den Figuren 3 und 4 ist der Behälter 2 einzeln dargestellt. Der Behälter 2 weist im ersten, oberen Bereich 2' angrenzend an die Öffnung 26 auf der Oberseite einen umlaufenden Rand 27 auf, an den sich in Radialrichtung zur Mittelachse Befestigungsabschnitte 28 anschließen. Die Befestigungsabschnitte 28 sind gleichmäßig in Umfangsrichtung beabstandet. Insgesamt sind drei Befestigungsabschnitte 28 vorgesehen. Die Befestigungsabschnitte 28 dienen zur Befestigung des nicht dargestellten Deckels an dem Behälter 2. Der Deckel liegt im montierten Zustand auf dem Rand 27 auf. Der Behälter 2 weist keinen Auslauf auf, der aber optional ist. Ebenfalls ersichtlich ist der in der Behälterwandung 17 angeordnete Flansch 19 für das Zerkleinerungswerkzeug.

In der dargestellten Ausführungsform ist der Behälter 2 einstückig aus Kunststoff ausgebildet.

Um die vorgegeben Grenzwerte von OEB einhalten zu können, wird nach jeder Anwendung, wenigstens eines der produktberührenden Teile ausgetauscht und entsorgt. Dadurch kann auf einen Großteil der Reinigung bzw. vollständig auf die Reinigung verzichtet werden. Damit dies kostentechnisch möglich ist, wird der zu entsorgende Teil des Mischgranulators aus Kunststoff gefertigt. Wenn OEB 5 eingehalten werden muss und es sich um eine High-Containment Anwendung handelt, werden bevorzugt alle produktberührenden Teile. Ein großer Vorteil dieser Bauart ist das Wegfallen der kostspieligen Reinigungsvalidierung. Somit ist jedwede Kreuzkontamination ausgeschlossen. Dies ist insbesondere bei hochtoxischen Materialien von großer Bedeutung.

Der Behälter kann einstückig ausgebildet sein. Es ist aber auch denkbar, dass nur Teile des Behälters aus Kunststoff gebildet sind. Dabei kann der Behälter mehrteilig sein oder beispielsweise integrierte Verstärkungselemente aufweisen. Bevorzugt wird der Behälter in Spritzguss gefertigt. Dies gilt auch für die anderen zu entsorgenden Teile bzw. produktberührenden Bauteile.

Der verwendete Kunststoff ist für den Einsatz im Lebensmittel- und pharmazeutischen Bereich geeignet. Er ist lebensmittelecht und weist Lebensmittelqualität gemäß FDA oder europäischen Vorschriften für Materialien mit Lebensmittelkontakt (insbesondere (EG) Nr. 1935/2004, (EU) Nr. 10/2011) auf, die den Betriebsanforderungen genügen.

## Patentansprüche

1. Mischgranulator (1) mit einem Behälter (2) zur Aufnahme eines Produktes, einem in dem Behälter (2) befindlichen, auf einer vertikal ausgerichteten Welle (7) sitzenden Mischwerkzeug (8) und einem in dem Behälter (2) befindlichen Zerkleinerungswerkzeug (16), **dadurch gekennzeichnet, dass** wenigstens ein produktberührendes Bauteil, nämlich
der Behälter (2),
das Mischwerkzeug (8), und
das Zerkleinerungswerkzeug (16),
zumindest teilweise aus einem Kunststoff oder einem Kunststoff-Verbundwerkstoff gebildet ist.

2. Mischgranulator nach Anspruch 1, **dadurch gekennzeichnet, dass** der Behälter (2) einen ersten Bereich (2'), der das Produkt aufnimmt mit einer Behälterwandung (17) und einem Boden (12), aufweisend eine Öffnung (11) zur Durchführung der Welle (7) und einen daran anschließenden Verbindungsbereich (2"), der eine zwischen einem Antrieb und der Welle (7) befindliche Kupplung umgibt, aufweist, wobei der Behälter (2) in der Behälterwandung (17) im ersten Bereich (2') einen Flansch (19) für das Zerkleinerungswerkzeug (16) aufweist.

3. Mischgranulator nach Anspruch 1 oder 2, **dadurch gekennzeichnet, dass** der Behälter (2) einstückig aus einem Kunststoff oder einem Kunststoff-Verbundwerkstoff gebildet ist.

4. Mischgranulator nach einem der vorhergehenden Ansprüche, **dadurch gekennzeichnet, dass** der Kunststoff oder der Kunststoff-Verbundwerkstoff lebensmittelecht ist.

5. Mischgranulator nach einem der vorhergehenden Ansprüche, **dadurch gekennzeichnet, dass** das Mischwerkzeug (8) Flügel (9) aufweist und das Zerkleinerungswerkzeug (16) im Wesentlichen u-förmig ist.

6. Mischgranulator nach einem der vorhergehenden Ansprüche, **dadurch gekennzeichnet, dass** der Mischgranulator (1) einen Unterbau (5) aufweist, der den Antrieb des Mischwerkzeugs (8) sowie einen Antrieb des Zerkleinerungswerkzeuges (16) abdeckt.

7. Mischgranulator nach einem der vorhergehenden Ansprüche, **dadurch gekennzeichnet, dass** der Behälter (2) mit dem Unterbau (5) mittels einer Bajonettverbindung verbunden ist.

8. Mischgranulator nach einem der vorhergehenden Ansprüche, **dadurch gekennzeichnet, dass** der erste Bereich (2') des Behälters (2) jeweils mittels Dichtungseinrichtung (14,21) gegenüber dem Mischwerkzeug (8) und dem Zerkleinerungswerkzeug (16) nach außen hin abgedichtet ist.

9. Verwendung eines Mischgranulators (1) nach einem der vorhergehenden Ansprüche zur Vermischung von pharmazeutischem Pulver mit Zuschlagstoffen.

10. Verwendung nach Anspruch 9 in einer High Containment Anwendung.

11. Behälter (2) für einen Mischgranulator (1) aufweisend einen ersten Bereich (2'), der dazu ausgebildet ist ein Produkt aufzunehmen, mit einer Behälterwandung (17) und einem Boden (12), aufweisend eine Öffnung (11) zur Durchführung einer Welle (7) eines Mischwerkzeuges (8) und einen daran anschließenden Verbindungsbereich (2"), wobei der Behälter (2) in der Behälterwandung (17) im ersten Bereich (2') einen Flansch (19) für ein Zerkleinerungswerkzeug (16) aufweist und der Behälter (2) eine dem Boden (12) gegenüberliegende Öffnung (26) mit einem Rand (27) hat, **dadurch gekennzeichnet, dass** der Behälter (2) zumindest teilweise aus einem Kunststoff oder einem Kunststoff-Verbundwerkstoff gebildet ist.

12. Verwendung eines Behälters (2) nach Anspruch 11 für einen Mischgranulator (1) zur Vermischung von pharmazeutischem Pulver mit Zuschlagstoffen.

13. Verwendung nach Anspruch 12 in einer High Containment Anwendung.

14. Verfahren zum Vermischen von Stoffen mit einem Mischgranulator (1) nach einem der Ansprüche 1 bis 8, wobei das Verfahren die folgenden Schritte umfasst:
• Einbringen der Stoffe in den Behälter (2),
• Vermischen der Stoffe in dem Behälter (2) mittels des Mischwerkzeuges (8),
• Rotieren des Zerkleinerungswerkzeuges (16),
• Entnehmen oder Austragen des Produktes aus dem Behälter (2), wobei das wenigstens eine produktberührende Bauteil entsorgt und erneuert wird, wenn ein Reinigungsprozess notwendig wäre, um Kreuzkontamination zu verhindern.

15. Verfahren nach Anspruch 14, **dadurch gekennzeichnet, dass** das Verfahren eine High Containment Anwendung ist und dass das wenigstens eine produktberührende Bauteil den Behälter (2) umfasst.
